# EUROPÄISCHE PATENTSCHRIFT

(11) **EP 3 721 831 B1**
(45) Veröffentlichungstag und Bekanntmachung des Hinweises auf die Patenterteilung: **26.04.2023**
(21) Anmeldenummer: 20175502.2
(22) Anmeldetag: 24.07.2017
(51) Int. Cl.: A61C 8/00

(54) **DENTALIMPLANTAT UND DENTALIMPLANTATSYSTEM**
DENTAL IMPLANT AND DENTAL IMPLANT SYSTEM
IMPLANT DENTAIRE ET SYSTÈME D'IMPLANT DENTAIRE

(30) Priorität: 29.07.2016 CH 10012016
(43) Veröffentlichungstag der Anmeldung: 14.10.2020
(62) Teilanmeldung aus: 17182833.8
(73) Patentinhaber: Woodwelding AG, 6362 Stansstad (CH)
(72) Erfinder: Thomke, Ernst, 2540 Grenchen (CH)
(74) Vertreter: Frei Patent Attorneys

(56) Entgegenhaltungen:
- WO-A1-2004/017857
- WO-A1-2005/079696
- WO-A1-2011/054123
- WO-A2-2008/034276

## Beschreibung

Die Erfindung liegt auf dem Gebiet der Dentalimplantatsysteme.

Unter den Dentalimplantatsystemen sind sogenannt einteilige und sogenannt zweiteilige Implantatsysteme bekannt.

In einteiligen Dentalimplantsystemen besitzt das eigentliche Dentalimplantat - welches in den Kieferknochen implantiert wird und der Verankerung einer funktionellen Suprakonstruktion dient, bspw. einer Krone, Brücke oder Prothese - eine nach der Implantation von koronal her zugängliche Struktur, auf welcher das Aufbauteil direkt befestigt werden kann.

In zweiteiligen Dentalimplantaten ist neben dem eigentlichen Implantat (auch "Verankerungsteil" oder, wenn es mit einem Gewinde versehen ist, "Schraube" genannt) ein zur Befestigung daran vorgesehenes Aufbauteil ("Abutment") notwendig. Das Verankerungsteil kann dabei so ausgestaltet sein, dass es ungefähr bündig mit der Knochenoberfläche eingebracht wird (als ein sogenanntes "bone-level"-Implantat), oder es kann mit einem Bereich koronal der Knochenoberfläche versehen sein, der oft gegenüber dem enossalen, i.a. mit einem Gewinde versehenen Bereich aufgeweitet ist, manchmal als "Tulpe" bezeichnet wird und vorgesehen ist, bis ungefähr zur Zahnfleischoberfläche zu reichen. Implantate mit einem solchen transgingivalen Bereich werden "tissue level"-Implantate genannt. Der aus dem Zahnfleisch herausragende Bereich ("Pfosten"), welcher dem Befestigen einer Suprakonstruktion, also einer Krone, Brücke oder Prothese oder dergleichen, dient, wird in zweiteiligen Implantatsystemen durch das Abutment gebildet.

Sowohl bei einteiligen Implantatsystemen als auch bei zweiteiligen Implantatsystemen erfreuen sich insbesondere die in den Knochen einzuschraubenden Implantate grosser Beliebtheit. Durch sie ist eine relativ kontrollierte Implantation möglich, und das Aussengewinde des Implantats erzeugt mindestens eine gewisse primäre Stabilität.

Trotz dieser gewissen primären Stabilität ist der Implantationsprozess sehr aufwändig und langwierig. Zunächst muss nach Extraktion des nicht mehr funktionsfähigen Zahnes recht lange gewartet werden, bis der Knochen am Ort der Extraktion wieder so weit regeneriert ist, dass er für ein anschliessend zu implantierendes Implantat genügend stabil ist. Anschliessend wird am Ort der Implantation ein Loch gebohrt, und das Implantat wird eingebracht. Daraufhin erfolgt eine mehrmonatige Einheilphase, während welcher das Implantat nicht mechanisch belastbar ist. Bei subgingivalen ("bone level") Implantaten ist während dieser Einheilphase das Zahnfleisch über dem Implantat geschlossen, während bei anderen Implantaten ein geeigneter Schutz angebracht werden muss. Erst nach der Einheilphase erfolgt, ggf. nach einer neuen Eröffnung des Zahnfleischs, die endgültige Versorgung mit Abutment und Krone, Brücke oder Prothese.

Es wurde auch vorgeschlagen, bspw. in WO 2013/124260, ein Dentalimplantat in einer an den extrahierten Zahn angepassten Form massanfertigen zu lassen und nach der Zahnextraktion direkt in die Extraktionsalveole einzusetzen. Durch diesen Ansatz entfällt die Wartezeit für das Nachwachsen des Knochens. Allerdings kann das Dentalimplantat aufgrund des unrunden Querschnitts nur durch Einklopfen implantiert werden, weshalb nach der Implantation eine nur sehr geringe Primärstabilität möglich ist. Daher wird in WO 2013/124260 vorgeschlagen, das Implantat mittels einer eigens dafür vorgesehenen Vorrichtung nach der Implantation an einem benachbarten Zahn zu befestigen. Nach der Einheilung ist trotzdem ein weiterer Versorgungsschritt nötig, indem die Befestigung entfernt werden muss und die definitive Krone erst dann aufgesetzt werden kann. Auch das Vorgehen gemäss WO 2013/124260 löst also das Problem nicht, dass zwischen Versorgungsschritten eine längere Knochenregenerationsphase nötig ist.

Aus WO 02/069 817 ist unter anderem ein Dentalimplantat bekannt, welches aus einem thermoplastischen oder thixotropen Material besteht. Dieses Material wird für die Verankerung unter Ultraschall-Vibrationen in einer linearen Bewegung nach apikal in den Kieferknochen hineingedrückt, wodurch es im fliessfähigen Zustand in Poren des Knochens gepresst wird und dort verankert wird. Zur koronalen Seite hin weist es eine Struktur auf, in welche ein künstlicher Zahn einschraubbar ist. Bei einem solchen System muss, wenn der künstliche Zahn anatomisch sinnvoll geformt ist, die Orientierung des Implantats nach der Implantation definiert sein. Auch WO 2004/017857 lehrt Implantate, darunter Dentalimplantate, bei welchen eine Verankerung im Knochen durch das Verflüssigen von thermoplastischem oder thixotropem Material und das anschliessende Verfestigen in einem Zustand, in welchem das Knochengewebe interpenetriert ist, bewirkt wird. Gemäss WO 2004/017857 besitzt das Implantat zusätzlich zum thermoplastischen oder thixotropen Material einen Teil, der einen Oberflächenbereich aus einem nicht verflüssigbaren Material bildet, welcher Bereich auch nach der Implantation frei von verflüssigtem Material bleibt. Ähnlich lehrt auch WO 2005/079696 solche Implantate, die sich jedoch dadurch auszeichnen, dass beim Einbringen durch die lineare Bewegung nach apikal Knochengewebe abgetragen wird, indem die Implantate Schneidkanten aufweisen um den Hohlraum, in welchen Implantiert wird, überhaupt zu schaffen. WO 2005/079696 lehrt auch Ausführungsformen, in denen thermoplastisches oder thixotropes Material in einen Hohlraum gebracht und von diesem nach der Verflüssigung durch Austrittsöffnungen ins umliegende Gewebe eindringt. WO 2005/079696 lehrt, diesen Hohlraum nach der Implantation dicht abzuschliessen. Gemäss WO 2011/054122, schliesslich, werden chirurgische Implantate durch thermoplastisches Material verankert, welches in einem fliessfähigen Zustand in den Knochen hineingedrückt wird, wobei das chirurgische Implantat eine Hülse mit einer longitudinalen Öffnung bildet, in welche ein thermoplastisches Element eingeführt wird und gegen deren distales Ende das Element für die Verflüssigung gedrückt wird.

Die Verankerung der Dentalimplantate gemäss WO 02/069 817, WO 2004/017857 und WO 2005/079696 ist vorteilhaft, da die Dentalimplantate unmittelbar nach der Implantation stabil verankert sind und die Verankerung sofort belastbar ist, was im Vergleich für die Patientin oder den Patienten Vorteile bringt. Allerdings setzt auch die Verwendung dieser Implantate im Allgemeinen eine längere Knochen-Regenerationszeit mindestens vor der Implantation voraus. Die WO 2005/079696 beschreibt diesbezügliche Lösungsansätze, die aber nicht für alle Implantationssituationen gleichermassen geeignet sind und ausserdem mit sich bringen, dass das natürliche verdichtete Knochengewebe um die Extraktionsalveole herum entfernt wird.

Es ist eine Aufgabe der Erfindung, ein Dentalimplantat und ein Dentalimplantatsystem zur Verfügung zu stellen, welche Nachteile des Standes der Technik überwinden und welche insbesondere eine Implantation mit sofortiger primärer Stabilität und/oder eine hohe Verankerungsstabilität ermöglichen ohne die Nachteile des diesbezüglichen Standes der Technik in Kauf nehmen zu müssen.

Diese Aufgabe wird gelöst durch die Erfindung, wie sie in den Patentansprüchen definiert ist.

Gemäss der Erfindung wird ein Dentalimplantat zur Verfügung gestellt, welches Implantat aufweist:
- Einen Implantatkörper, welcher sich zwischen einem koronalen und einem apikalen Ende erstreckt und eine enossale Aussenfläche definiert, wobei der Implantatkörper einen nach koronal offenen Hohlraum sowie mindestens eine Austrittsöffnung von einem Innern zur enossalen Aussenfläche aufweist,
- und ein thermoplastisches Element im Festzustand, welches im Hohlraum angeordnet oder in diesen einbringbar ist, wobei das thermoplastische Element durch Anlegen einer nach apikal in den Hohlraum hinein gerichteten Presskraft und von mechanischen Schwingungen (bspw. mit Frequenzen zwischen 10 und 100 kHz) in einen mindestens teilweise fliessfähigen Zustand bringbar ist und in diesem Zustand mindestens ein Anteil von fliessfähigem Material des thermoplastischen Elements aufgrund der Presskraft durch die mindestens eine Austrittsöffnung in umgebendes Knochengewebe pressbar ist, wenn die Implantatkörper in einer Öffnung im Knochengewebe angeordnet und die enossale Aussenfläche mit Knochengewebe in Kontakt ist. Nach der erneuten Verfestigung des thermoplastischen Materials nach dem Ausschalten der Vibrationen bewirkt das eine Verankerung durch die so bewirkte Verbindung zwischen interpenetriertem Gewebe einerseits und Implantatkörper andererseits durch das beide durchdringende thermoplastische Material.

Das Implantat ist auf die anatomische Implantationssituation hin optimiert und/oder für die sofortige Implantation in der Extraktionsalveole ausgebildet. Zu diesem Zweck weist es bspw. eine unrunde Form auf, d.h. es ist nicht um die koronal-apikale Achse drehsymmetrisch. Zusätzlich oder als Alternative weist es folgendes Merkmal auf:

Der Hohlraum ist nicht rotationszylindrisch, sondern bspw. in seiner Form an die Form des natürlichen Zahns angepasst. Auch das thermoplastische Element und/oder das distale Ende einer Sonotrode, mit welcher die Presskraft und die mechanischen Schwingungen eingekoppelt werden, ist/sind im Querschnitt nicht kreisförmig sondern weist/weisen einen der Hohlraumform entsprechenden Querschnitt auf.

Zusätzlich kann optional eines oder mehrere der folgenden Merkmale realisiert sein:
A. Eine äussere Oberfläche des Implantatkörpers weist im enossalen Bereich eine an die Anatomie eines natürlichen Zahns angepasste Form auf, indem sich der - insbesondere nicht-runde - Querschnitt nach apikal hin kontinuierlich und stufenlos reduziert.
C. Der Implantatkörper weist im enossalen Bereich mehrere als nach apikal ragende Vorsprünge ausgebildete Wurzelvorsprünge (Wurzelkanäle) auf. Insbesondere kann in jedem Wurzelvorsprung mindestens eine Austrittsöffnung münden. Zu diesem Zweck kann gemäss einer ersten Option das Implantat mehrere Hohlräume, für jeden Wurzelvorsprung eine, aufweisen, oder der Hohlraum kann gemäss einer zweiten Option sich nach apikal hin verzweigen, in in die Wurzelvorsprünge führende Teil-Hohlräume (Kanäle).
D. Apikal jeder Austrittsöffnung ist eine Schneidkante, insbesondere pflugförmige Schneidkante vorhanden.
E. Das Implantat bildet als Bestandteil eines mehrteiligen Implantatsystems eine Stufe auf Gingiva- oder Knochenniveau aus oder bildet ein einteiliges Implantatsystem mit Krone, wobei der Hohlraum bzw. die Hohlräume von der Krone ausgehend nach apikal verlaufen und verschliessbar ist/sind.

Die Merkmale sind für sich alleine realisierbar oder beliebig kombinierbar, wobei bei einer Kombination der Merkmale A und D das Merkmal A nur für den Bereich koronal der Schneidekante zu verstehen ist (in anderen Ausführungsformen gilt die Stufenlosigkeit für den ganzen enossalen Bereich). Alle anderen Kombinationen sind ohne Einschränkung möglich, wobei sich wie nachstehend noch beschrieben Synergieeffekte ergeben können.

Die Austrittsöffnungen sind insbesondere relativ weit apikal und, sofern mehrere vorhanden sind, auf einer selben Stufe angeordnet. Letzteres bedeutet, dass es nicht mehrere Etagen von Austrittsöffnungen gibt, d.h. dass nicht mehrere Austrittsöffnungen an einer einander in Umfangsrichtung entsprechenden Position übereinander angeordnet sind.

Der Ansatz gemäss der Erfindung ermöglicht, dass das Implantat unmittelbar nach der Implantation in die Extraktionsalveole eingesetzt und dort verankert wird, und zwar aufgrund des thermoplastischen Materials dauerhaft (wenn das Material nicht resorbierbar ist) oder mindestens so lange, bis die Osseointegration genügend weit fortgeschritten ist, um das Implantat durch Einwachsen zu verankern (wenn das Material resorbierbar ist). Damit wird ein Nachteil derjenigen Implantate, welche in ihrer Form an die Extraktionsalveole angepasst sind und durch Einklopfen in diesen verankert werden, beseitigt. Es hat sich nämlich gezeigt, dass eine Verankerung im Knochen über einen Pressfit zwar unmittelbar an die Implantation anschliessend recht stabil sein kann, dass aber in den darauffolgenden Wochen die Verbindung über den Pressfit schwächer wird.

Der Ansatz der Erfindung schliesst nicht aus, dass der Implantologe das Implantat erst nach einer Knochenregenerationsphase setzt, also nicht direkt in die Extraktionsalveole implantiert. Auch dann ist der erfindungsgemässe Ansatz noch vorteilhaft, kann doch durch die nicht notwendigerweise rotationssymmetrische und zylindrische oder konische Form eine viel besser an die Anatomie angepasste Implantatform gewählt werden, und die längerfristige Stabilität wird so stark begünstigt.

Auch gemäss dem erfindungsgemässen Vorgehen kann der Implantatkörper leicht überdimensioniert sein, d.h. die äusseren Abmessungen sind leicht grösser als die Abmessungen der Kavität (Extraktionsalveole oder nachträglich angefertigte Öffnung im Knochen), so dass der Implantatkörper beim Einbringen (dann bspw. durch Einklopfen) in die Kavität in diese hineingepresst wird und auch durch einen Pressfit gehalten wird.

Eine sich nach apikal stufenlos reduzierende Querschnittsform gemäss Merkmal A ist der anatomischen Wurzelform nachempfunden und ermöglicht so eine optimale Anpassung an die anatomischen Gegebenheiten. Die Form kann insbesondere so sein, dass die Schwerpunktlinie (axialer Verlauf des Schwerpunkts der horizontalen Schnittfläche) gekrümmt ist, allerdings bspw. ohne dass die äussere Oberfläche des Implantatkörpers im enossalen Bereich einen Hinterschnitt bildet.

Der Implantatkörper eines Implantats mit Merkmal A kann insbesondere eine im enossalen Bereich stetige Oberflächenform ohne Rippen und Rinnen aufweisen, mit Ausnahme einer optionalen flächendeckenden oder selektiv vorhandenen Oberflächenrauigkeit, welche die Osseointegration begünstigt. Es ist aber auch nicht ausgeschlossen, dass axial, d.h. längs verlaufende Rippen und/oder Rinnen vorhanden sind. Durch Kompression der von den Rippen gebildeten äusseren Kanten kann so bei eher weicheren Implantatmaterialien (bspw. metallischen Implantatmaterialien) ein zusätzlicher Rückhalt bewirkt werden. Bei härteren Implantatmaterialien wird am Ort von Rippen das Knochengewebe nachgeben, und die entstehende Struktur wird zu einer zusätzlichen mechanische Verankerung beitragen.

Ganz allgemein kann die äussere Implantatoberfläche im enossalen Bereich als Ganze rau sein, wobei eine Rauigkeit flächendeckend oder selektiv nur an einigen Orten vorhanden sein kann. Die Oberflächenrauigkeit kann wie an sich bekannt in einem abtragenden Verfahren (Sandstrahlen, Laserstrahl-Abtragen) und/oder einem auftragenden Verfahren (Beschichten) erzeugt sein. Auch durch die Auswahl passender chemischer Eigenschaften der Oberfläche (Beschichtung) kann die Osseointegration begünstigt werden.

Die Querschnittform des Hohlraums kann elliptisch, näherungsweise vieleckig (bspw. mit abgerundeten Ecken), mehrlappig, etc. sein. Eine solche Querschnittform ermöglicht erstens, dass bei einem Implantat mit unrundem Querschnitt das thermoplastische Material schwerpunktmässig näher bei der vorgesehenen Austrittsöffnung liegt, und zwar schon im Anfangszustand vor der Verflüssigung. Ausserdem ermöglicht das Merkmal eine optimale Ausgestaltung der Wandstärken des Implantatkörpers auch bei vergleichsweise grossen Verhältnissen zwischen Volumen des Hohlraums und anatomiebedingt begrenztem äusserem Querschnitt des Implantatkörpers.

Die Querschnittform des thermoplastischen Elements kann insbesondere auf die Querschnittform des Hohlraums abgestimmt sein, indem das thermoplastische Element im festen Zustand den Hohlraum in einem axialen Bereich im Wesentlichen ganz ausfüllt, wenn es in den Hohlraum eingeschoben ist bzw. diesen von Anfang an ausfüllt. Ergänzend kann ein distales Ende der Sonotrode, mit welcher die Verflüssigung bewirkt wird, einen angepassten Querschnitt aufweisen. Dadurch kann ein Rückfluss von thermoplastischem Material nach koronal auch dann verhindert werden, wenn das thermoplastische Element während des Verfahrens bis zum koronalen Ende hin verflüssigt wird.

Merkmal C beruht erstens auf der Erkenntnis, dass auch für den Ersatz von Zähnen mit mehrkanaligen Wurzeln ein anatomisch optimal angepasstes Implantat zur Verfügung gestellt werden kann. Es ist also nicht nötig, wie beim Stand der Technik vorgesehen, ein Implantat mit entsprechend im Vergleich zu einem einzigen Wurzelkanal leicht vergrössertem Querschnitt im Bereich der Mitte der Zahnwurzel zu implantieren, was nicht an die natürlichen anatomischen Verhältnisse angepasst ist, sondern das Implantat kann fast wie natürlich gewachsen ausgestaltet sein, zumal auch die natürliche Zahnwurzelform höchstens einen leichten Hinterschnitt bildet und daher gut durch eine Bewegung in axialer Richtung implantierbare Form angenähert werden kann (auch - das gilt generell für Ausführungsformen der Erfindung - eine leicht hinterschnittene Implantatkörper-Form ist im Übrigen möglich, zumal das thermoplastische Material eventuell dadurch entstehende Hohlräume füllen und so Dimensionen ausgleichen kann). Zweitens beruht Merkmal C auf der Erkenntnis, dass die Verankerung mittels thermoplastischem Material sich fast ideal mit einer entsprechenden mehrkanaligen Wurzelform vereinbaren lässt, indem Hohlräume bzw. Teil-Hohlräume in die verschiedenen Kanäle führen können und so eine tiefenwirksame Verankerung ideal unterstützen. Besonders vorteilhaft kann das auch sein, weil im Allgemeinen das Knochengewebe in grösserer Tiefe spongiöser ist und mehr Hohlräume aufweist, in welche das verflüssigte thermoplastische Material fliessen kann um nach der Wieder-Verfestigung eine Verankerung zu bilden.

Wenn das Implantat direkt in die Extraktionsalveole eingesetzt wird, ergibt sich je nach Patient die Situation, dass das Knochengewebe unmittelbar um die Alveole herum sehr dicht ist. Das hat einerseits den Vorteil einer sehr grossen mechanischen Stabilität des das Implantat stützenden Knochengewebes. Andererseits besteht der mögliche Nachteil, dass verhältnismässig wenig thermoplastisches Material in das Knochengewebe eindringen kann und die desbezügliche Verankerung unter Umständen oberflächlich bleiben würde. Zu diesem Zweck sieht ein ebenfalls zur Erfindung gehörendes Verfahren zur Implantation eines Implantats der in diesem Text beschriebenen und beanspruchten Art vor, dass das Knochengewebe nur lokal dort entfernt wird, wo später die Austrittsöffnungen liegen. Das kann vom erfahrenen Implantologen händisch mit einem entsprechenden Bohr- oder Stanzwerkzeug gemacht werden. Alternativ können auch angepasste Hilfsmittel mit einer den Benutzer führenden Funktion verwendet werden. Beispielsweise kann ein nichtrotierendes Bearbeitungswerkzeug verwendet werden, welches eine an die Extraktionsalveole angepasste äussere Form aufweist und dadurch in diese in einer in Bezug auf diese definiert ausgerichteten Orientierung einführbar ist. Ein solches Werkzeug kann eingerichtet sein, Knochengewebe lokal am Ort der Austrittsöffnungen abzutragen, bspw. indem mechanische Schwingungen darin eingekoppelt werden.

Als weitere Alternative kann das Implantat so eingerichtet sein, dass es selbst beim Implantieren ganz lokal das verdichtete Knochengewebe wegräumt. Dies geschieht nach Merkmal D mit einer apikal der Austrittsöffnung - und nur dort - vorgesehenen Schneidekante. Insbesondere - aber nicht nur - Ausführungsformen mit Merkmal D kann vorgesehen sein, dass die Austrittsöffnung bzw. die Austrittsöffnungen in einem Bereich liegen, in welchem der Implantatskörper eine sich nach apikal markant verjüngende Form aufweist. Dadurch greift die apikal der Austrittsöffnung liegende Schneidekante erst dann in das Knochengewebe ein, wenn der Implantatkörper schon weit in die Alveole eingedrungen ist, und der von dichtem Knochengewebe befreite Bereich beschränkt sich auf den Bereich in unmittelbarer Nähe der Austrittsöffnung.

Eine solche Schneidekante kann im Wesentlichen horizontal verlaufen, d.h. parallel zu einer Ebene senkrecht zur koronal-apikalen Achse. Sie kann auch schräg verlaufen, aber nicht-parallel zur koronal-apikalen Achse. Die Schneidekante wird aber im Gegensatz zu Ansätzen gemäss dem Stand der Technik nicht umlaufend sein, sondern auf den Ort der Austrittsöffnung beschränkt, d.h. sie ist nur so breit wie die Austrittsöffnung oder unwesentlich breiter.

Eine solche Schneidekante kann auch im Wesentlichen pflugförmig, d.h. V-förmig verlaufen. Sie ist insbesondere geeignet, um die Austrittsöffnung herum das verdichtete Knochengewebe zu zermahlen. Dadurch entstehendes zermahlenes Knochengewebe (Knochenfragmente, darunter auch feine Körner) können durch das austretende thermoplastische Material 'zementiert' d.h. zu einer gemeinsamen verfestigten Masse geformt werden.

Merkmal E nutzt den Umstand, dass Implantate schon unmittelbar nach der Implantation zu einem gewissen Grad belastbar sind. Gemäss der ersten Option kann das Implantatsystem nebst dem Implantat mit Implantatkörper und thermoplastischem Element auch eine auf die Stufe aufsetzbare separate Krone sowie optional einen vor dem Platzieren der Krone anwendbaren Gingivaformer aufweisen. Gemäss der zweiten Option kann die Krone direkt einteilig mit dem Implantat vorhanden sein, d.h. das Implantat bildet als Ganzes einen künstlichen Zahn mit Wurzel und Krone. Zum Verschliessen des Hohlraums bzw. der Hohlräume kann bspw. ein für dentale Anwendungen vorgesehener Zement verwendet werden. Gemäss beiden Optionen kann die Krone individuell angefertigt sein.

Der Implantatkörper selbst kann - das gilt generell für erfindungsgemässe Implantate - gemäss einer ersten Option ebenfalls individuell gefertigt sein. Das kann in an sich bekannter Weise mittels eines computerbasierten, auf 3D-Daten beruhenden Verfahrens geschehen (,3D-Printing'). Die für das Verfahren verwendeten 3D-Daten beruhen auf im Patienten gewonnenen Messdaten, wobei diese manuell oder durch eine Software so angepasst werden, dass ein Hohlraum oder eine Mehrzahl Hohlräume mit den in diesem Text beschriebenen Eigenschaften eingepasst wird.

Gemäss einer zweiten Option kann eine Mehrzahl von den natürlichen Zahnwurzelformen angepassten Implantatkörpern und entsprechenden thermoplastischen Elementen zur Verfügung stehen, bspw. in unterschiedlichen Grössen. Der Implantologe wählt dann der Implantationsposition entsprechend ein Implantat aus. Die Erfindung umfasst auch ein Implantat-Set mit einer Auswahl an vorgefertigten Implantaten für verschiedene Implantationssituationen. Ein solches Implantat-Set kann insbesondere sowohl Implantate mit nur einem Wurzelkanal als auch Implantate mit mehreren Wurzelkanälen, bspw. mit zwei und mit drei Wurzelkanälen, aufweisen.

Das thermoplastische Material des thermoplastischen Elements kann resorbierbar sein, beispielsweise indem es auf Polylactidbasis zusammengesetzt ist. Dann dient das thermoplastische Material lediglich der primären Stabilisierung, während später der in die Strukturen der Mantelfläche eingewachsene Knochen die Stabilisierung übernimmt. Der Knochen kann dann auch in die Austrittsöffnungen hineinwachsen, was die mechanische Stabilität noch weiter erhöht. Alternativ kann das thermoplastische Element auch aus einem nicht resorbierbaren Material bestehen, beispielsweise PMMA oder einem Polyamid. Sowohl an für die Implantation geeigneten resorbierbaren als auch an nicht-resorbierbaren Materialien gibt es eine grosse Auswahl; die Erfindung ist nicht auf bestimmte Materialien beschränkt.

Der Implantatkörper kann keramisch sein. Für Implantatkörper aus keramischen Materialien ist das erfindungsgemässe Vorgehen besonders günstig, weil es ermöglicht, dass der vorhandene Platz geradezu optimal ausgenutzt wird, und dass Wandstärken des Implantats homogen sind, so dass die Bruchfestigkeit optimiert werden kann.

Das Vorgehen gemäss der Erfindung ist aber ebenso gut auch für Implantatkörper aus metallischen Materialien geeignet, bspw. Materialien auf Titanbasis.

Der Hohlraum ist im Allgemeinen, ggf. bis zur Verzweigung in die Teil-Hohlräume, zylindrisch, d.h. entlang der koronal-apikalen Achse translationssymmetrisch. Nach apikal ist er begrenzt durch eine Anstosspartie, welche insbesondere einen Energierichtungsgeber aufweisen kann. Ein solcher Energierichtungsgeber kann eine nach koronal ragende Kante oder Spitze aufweisen.

Ebenfalls Gegenstand der Erfindung ist ein Implantationsset, welches nebst dem Implantat auch eine Sonotrode aufweist, welche ausgeformt ist, mit ihrem distalen Ende von koronal her in den Hohlraum einzugreifen und die mechanischen Schwingungen sowie die Presskraft anzulegen.

Eine solche Sonotrode kann direkt an ein Gerät zur Erzeugung der mechanischen Schwingungen koppelbar sein, oder es kann ein Zwischenteil zwischen einem solchen Gerät und der Sonotrode verwendet werden, bspw. zum Umlenken der Schwingungen. Ein solches Zwischenteil ist bspw. in WO 2007/101 362 offenbart.

Die Sonotrode kann insbesondere ebenfalls ein nicht drehsymmetrisches distales Ende aufweisen, mit einer Querschnittform, welche bspw. der Querschnittform des Hohlraums entspricht.

Weiter Gegenstand der Erfindung ist ein Verfahren zum patientenspezifischen Herstellen eines Implantats der in diesem Text beschriebenen Art. Zur Herstellung des Implantatkörpers werden in einem ersten Schritt durch eine Messung Daten eines Patienten aufgenommen und in ein 3D-Modell eines Implantats umgesetzt. Dieses 3D-Modell wird anschliessend wie vorstehend erwähnt manuell oder durch eine Software so angepasst werden, dass ein Hohlraum oder eine Mehrzahl Hohlräume mit den in diesem Text beschriebenen Eigenschaften eingepasst wird. Dann wir der Dentalimplantatkörper auf als physische Umsetzung des mit dem Hohlraum versehenen 3D-Modells in einem computerunterstützten Fertigungsverfahren hergestellt wird. Solche bspw. auf einer computergesteuerten, gezielten lokalen Anregung einer Herstellungsmasse zwecks Verfestigung beruhende Fertigungsverfahren sind inzwischen bekannt und werden hier nicht weiter beschrieben.

Nachfolgend werden Ausführungsbeispiele der Erfindung anhand von Figuren näher erläutert. In den Figuren bezeichnen gleiche Bezugszeichen gleiche oder analoge Elemente. Es zeigen:
- Fig. 1-5: zur Illustration, verschiedene natürliche Zahnformen;
- Fig. 6: ein Implantat (nicht gemäss der beanspruchten Erfindung) mit Sonotrode;
- Fig. 7 und 8: einen Gingivaformer und eine Krone für ein Implantat gemäss Fig. 6;
- Fig. 9: einen alternativen Implantatkörper (nicht gemäss der beanspruchten Erfindung);
- Fig. 10 und 11: verschiedene Querschnittformen (Fig. 11 erfindungsgemäss, Fig. 10 nicht gemäss der beanspruchten Erfindung);
- Fig. 12 und 13: je ein Beispiel eines Implantatkörpers (nicht gemäss der beanspruchten Erfindung) mit zwei Wurzelkanälen;
- Fig. 14 und 15: Schnittdarstellungen eines Implantats (nicht gemäss der beanspruchten Erfindung) während und nach der Implantation;
- Fig. 16-18 und 20: Ansichten von Implantatkörpern (nicht gemäss der beanspruchten Erfindung) mit drei Wurzeklanälen;
- Fig. 19: eine Querschnittform (nicht gemäss der beanspruchten Erfindung);
- Fig. 21 und 22: einen Gingivaformer und eine Krone für ein Implantat gemäss Fig. 20;
- Fig. 23 und 24: ein einteiliges Implantat mit angeformter Krone sowie ein Verschlussstück dafür;
- Fig. 25-28: Implantate mit mehreren Wurzelkanälen und mit einem im Querschnitt mehrlappigen Hohlraum sowie entsprechende thermoplastische Elemente;
- Fig. 29: eine Variante einer Querschnittform;
- Fig. 30: eine angepasste Sonotrode;
- Fig. 31: einen Implantatkörper mit Schneidekanten;
- Fig. 32 und 33: alternative Schneidekanten-Formen; und
- Fig. 34: ein Werkzeug zum Präparieren einer Extraktionsalveole.

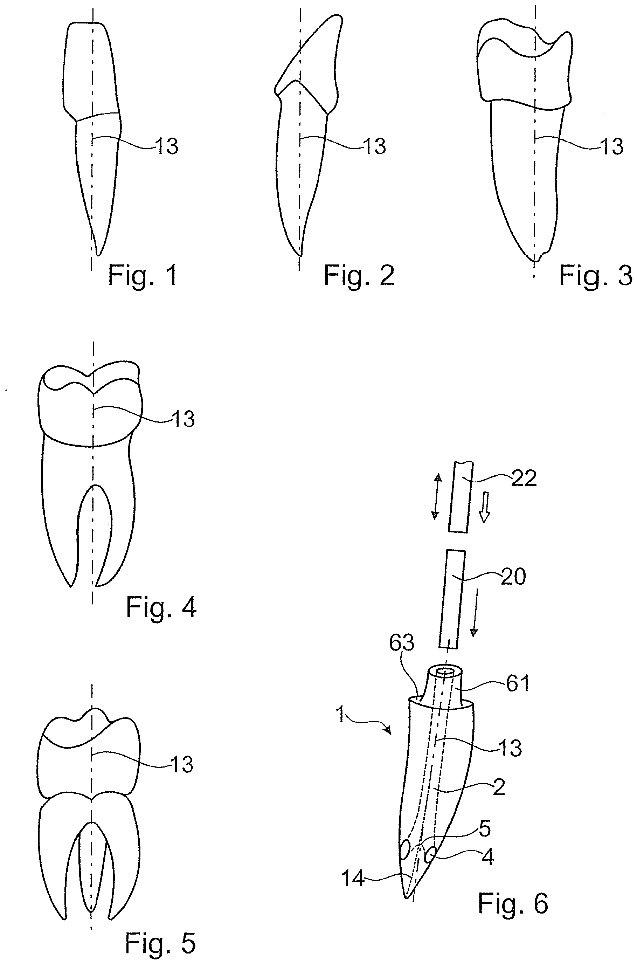

**Figuren 1-5** zeigen zu Illustrationszwecken eine Auswahl an vereinfacht dargestellten natürlichen Zahnformen. Die Zahnwurzel kann bei Vorhandensein eines einzigen Wurzelkanals im Querschnitt ungefähr elliptisch (Fig. 1, Beispiel eines unteren Schneidezahn), näherungsweise dreieckig (Fig. 2, Beispiel eines Eckzahns), annäherungsweise rechteckig (Fig. 3, Beispiel eines zweiten Prämolars) oder auch ungefähr kreisförmig oder auch relativ komplex sein, und sich nach apikal verjüngend verlaufen. Fig. 4 und 5 illustrieren Zähne, deren Wurzeln zwei bzw. drei Wurzelkanäle aufweisen.

Man sieht dass in allen Fällen der enossale Bereich in Bezug auf Richtungen entlang der koronal-apikalen Achse 13 nicht oder (bei Wurzeln mit zwei oder drei Wurzelkanälen) nur wenig hinterschnitten ist. Die Formen lassen sich also gut durch nicht hinterschnittene, durch eine nicht-drehende Bewegung in apikaler Richtung einsetzbare Implantatformen annähern.

**Figur 6** illustriert, in einer Ansicht, ein Implantat mit Implantatkörper 1 und thermoplastischem Element 20.

Der Implantatkörper 1 ist beispielsweise aus einer Zirkonoxidkeramik gefertigt, insbesondere einer insbesondere eine Yttrium-stabilisierten Zirkonoxid-basierten Keramik. Generell gilt die Lehre, welche hier anhand von Ausführungsbeispielen beschrieben wird, aber auch für Implantatkörper aus einem anderen Werkstoff, beispielsweise aus einer anderen Keramik, insbesondere auf Aluminiumoxid-Basis, oder aus einem Metall, bspw. Titan oder einer Titanlegierung. Wie bereits vorstehend erläutert kann der Implantatkörper optional patientenspezifisch angefertigt worden sein, mit geeigneten computergestützten (CAD/CAM) Methoden (mit "3D-Printing" im weiteren Sinn). In solchen Ausführungsformen kann die Materialwahl entsprechend der Fertigungsmethode angepasst sein und bspw. ebenfalls auf keramischer oder metallischer Basis gewählt sein, wobei als Kriterien Preis, Stabilität und Metallempfindlichkeit dienen können. Je nach Ausgangslage geeignete Materialien sind an sich bekannt.

Vom koronalen Ende nach apikal erstreckt sich ungefähr parallel zu einer Achse 13 ein zum koronalen Ende hin offener Hohlraum 2, der sich fast über die ganze Länge des Implantats erstreckt und nach apikal durch eine Anstosspartie 5 begrenzt wird. Vom Hohlraum 2 radial nach aussen zur Aussenfläche (Mantelfläche) hin sind zwei einander gegenüberliegende Austrittsöffnungen 4 ausgebildet. Die Anstosspartie 5 ist zur Mitte hin leicht zugespitzt, so dass sich ein Energierichtungsgeber ausbildet.

Wie man in Fig. 6 sieht, ist hingegen der Querschnitt des Implanatkörpers als Ganzem im enossalen Bereich nicht konstant, sondern der Implantatkörper verweist einen sich nach apikal stufenlos verjüngenden Querschnitt auf. Die äussere Oberfläche (Mantelfläche) ist beispielsweise aufgerauht, z. B. mittels Laserbehandlung oder mittels Sandstrahlen, oder er ist mit einer geeigneten, ebenfalls eine gewisse Rauhigkeit verleihenden, Beschichtung versehen. Die äussere Oberfläche ist insbesondere dazu vorgesehen, Osseointegration zu fördern, und ihre Rauigkeit ist entsprechend angepasst.

Ausserdem sieht man, dass die äussere Form optional nach apikal nicht nach allen Seiten gleich verjüngt, sondern ungleichmässig, so dass bspw. die apikale Spitze nicht auf der Achse 13 liegt. Des Schwerpunkts der horizontalen Schnittfläche (d.h. der Fläche im Schnitt senkrecht zur Achse 13) verläuft in Funktion der axialen Position also nicht konstant, sondern die entsprechende Schwerpunktlinie 14 ist leicht gekrümmt. Allerdings bildet die äussere Oberfläche der enossalen Bereichs des Implantatkörpers bspw. keinen Hinterschnitt.

Im koronalen Bereich ist ein Pfosten 61 zur Befestigung einer Suprakonstruktion ausgebildet. Der Hohlraum 2 erstreckt sich axial durch den Pfosten 61 hindurch. Im gezeichneten Ausführungsbeispiel bildet sich zwischen dem apikalen Bereich und dem Pfosten 61 eine Stufe 63 aus. Diese kann bspw. ungefähr auf Gingivaniveau ausgebildet sein und optional kann eine nachstehend noch erläuterte Auskragung zur Kompression des Zahnfleischs vorhanden sein. Abweichend vom Gezeichneten kann anstelle einer ausgeprägten Stufe 63 auch ein anderer, insbesondere kontinuierlicherer Verlauf vorhanden sein; entsprechende Formen sind von Dentalimplantaten einteiliger Systeme oder von Abutments zweiteiliger Systeme bekannt.

Vom koronalen Ende nach apikal erstreckt sich parallel zur Achse 13 eine zum koronalen Ende hin offene Öffnung 2, die sich fast über die ganze Länge des Implantats erstreckt und nach apikal durch eine Anstosspartie 5 begrenzt wird. Von der Öffnung 2 radial nach aussen zur Aussenfläche (Mantelfläche) hin sind zwei einander gegenüberliegende Austrittsöffnungen 4 ausgebildet. Die Anstosspartie 5 ist zur Mitte hin leicht zugespitzt, so dass sich ein Energierichtungsgeber 7 ausbildet, dessen Funktion nachstehend noch erläutert wird.

Ausserdem ist eine Sonotrode 22 mit einem auf den Hohlraum 2 angepassten Querschnitt angedeutet. Der Querschnitt der Sonotrode 22 ist so, dass diese im Wesentlichen ohne Kraftaufwand in den Hohlraum 2 einschiebbar ist, wenn dieser frei ist. Der Hohlraum 2 ist beispielsweise zylindrisch, d.h. er weist mindestens bereichsweise einen entlang der koronal-apikalen Achse 13 konstanten Querschnitt auf.

Für die Implantation wird beispielsweise anschliessend an die Extraktion des natürlichen Zahnes - gegebenenfalls mit zusätzlichem Präparationsschritt, wie er nachstehend noch beschrieben wird - oder auch anschliessend an das Präparieren einer entsprechenden Kavität im Kieferknochen das Implantat in die Extraktionsalveole bzw. Kavität eingesetzt und beispielsweise leicht eingehämmert.

Dann wird das thermoplastische Element durch die Sonotrode 20 nach apikal gegen die Anstosspartie 5 gedrückt, während die Sonotrode mit mechanischen Schwingungen beaufschlagt wird, wodurch das thermoplastische Material des thermoplastischen Elements 20 im Kontakt mit der Anstosspartie 5 erwärmt wird, bis es fliessfähig ist und aufgrund des Anpressdrucks durch die Austrittsöffnungen 4 nach aussen verdrängt und in Strukturen des Knochengewebes gedrückt wird. Die als Energierichtungsgeber wirkende Form der Anstosspartie kann dabei bewirken, dass die Energieabsorption anfangs primär in Kontakt mit dieser stattfindet, wodurch sich das thermoplastische Material zunächst dort am meisten erwärmt. Weil die innere Reibung des thermoplastischen Materials viel höher ist, wenn dieses eine höhere Temperatur hat (bspw. bei amorphen Thermoplasten wenn es über der Glasübergangstemperatur liegt), wird auch anschliessend schwerpunktmässig am apikalen Ende Energieabsorption stattfinden, wodurch gewährleistet wird, dass im Bereich der Austrittsöffnungen 4 verflüssigt wird. Während dieses Prozesses verschiebt sich das Interface zwischen Sonotrode 22 und thermoplastischem Element 20 laufend nach apikal, wodurch je nach Länge des thermoplastischen Elements der koronale Bereich des Hohlraums im Wesentlichen frei von thermoplastischem Material bleiben und nach Entfernen der Sonotrode einem anderen Zweck dienen kann - bspw. der Befestigung eines Abutments zwischen Implantatkörper und Krone oder eines Befestigungsteils für eine Prothese - und/oder durch ein geeignetes Element verschlossen werden kann.

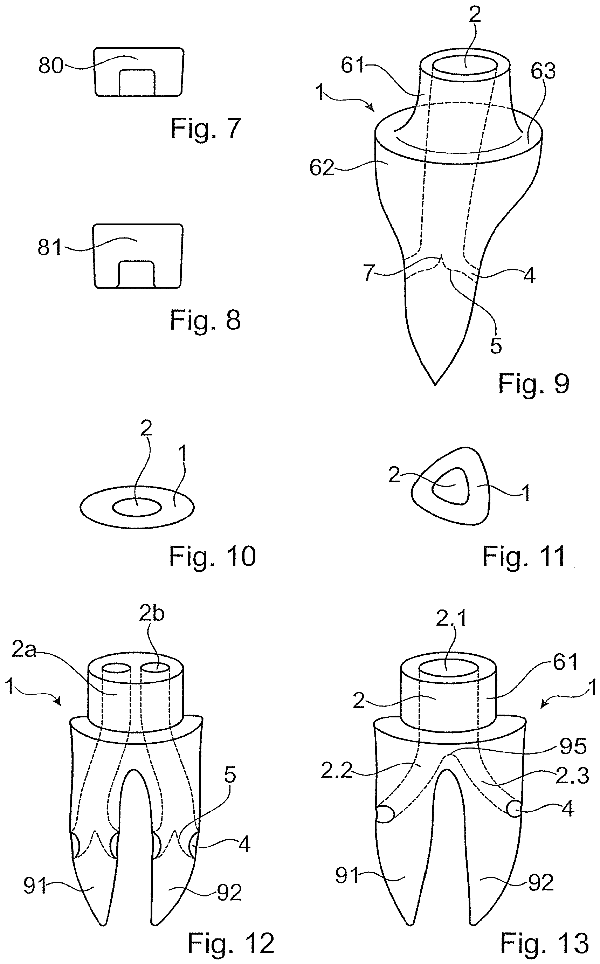

**Figur 7** illustriert sehr schematisch einen sogenannten Gingivaformer, d.h. eine Kappe, die nach der Implantation auf den Pfosten 61 aufgesetzt werden kann bis das Zahnfleisch verheilt ist. Anschliessend kann eine bedürfnisgerecht angepasste Krone 81 (**Figur 8**) am Implantatkörper befestigt werden. Auch mehrteilige Lösungen mit einem Abutment zwischen Implantatkörper und Krone sind denkbar.

Die Ausführungsform gemäss **Figur 9** ist erstens ein Beispiel eines Implantatkörpers, bei welchem nebst der leicht elliptischen äussere Form des Implantatkörpers auch der Querschnitt des Hohlraums 2 entsprechend angepasst ist. Die Stärke der um den Hohlraum 2 umlaufenden Wand ist daher weniger inhomogen als wenn der Hohlraum rotationszylindrisch wäre. Ausserdem wird Verflüssigung und Verteilung des thermoplastischen Materials zu den Seiten hin, wo aus anatomischen Gründen mehr Platz vorhanden ist und eine bessere Verankerung möglich ist, erleichtert.

Die Ausführungsform gemäss Fig. 9 weist zwei optionale Merkmale auf, welche unabhängig von der Querschnittsform des Hohlraums und unabhängig voneinander, d.h. auch in anderen Ausführungsformen als derjenigen von Fig. 9, implementierbar sind:
- Der Implantatkörper 1 bildet nach koronal eine markante Auskragung, welche im implantierten Zustand transgingival angeordnet ist. Im Bereich der Auskragung kann das Implantat optional einen grösseren etwas Querschnitt aufweisen als der extrahierte Zahn. Dadurch wird das Zahnfleisch leicht komprimiert, wie das an sich von konventionellen Implantatsystemen bereits bekannt ist.
- Die die Anstosspartie 5 bildet eine markante, nach koronal weisende Spitze 7 aus, welche als Energierichtungsgeber wirkt und ein Einsetzen der Verflüssigung des nach apikal gedrückten thermoplastischen Elements begünstigt, wenn mechanische Schwingungen in dieses eingekoppelt werden.

**Figur 10** illustriert schematisch eine mögliche Querschnittsform des Implantatkörpers 1, entlang einer Ebene senkrecht zur apikal-koronalen Achse und koronal der Austrittsöffnungen 4, wenn die Querschnittform des zu ersetzenden Zahnes ungefähr elliptisch ist. Die Wandstärke kann durch die Querschnittsform des Hohlraums 2 ungefähr konstant gehalten werden, oder sie kann inhomogen sein, wobei der Hohlraum bevorzugt entsprechend der äusseren Querschnittsform ausgerichtet ist, so dass die Wandstärke im Vergleich zu einem entsprechenden rotationszylindrischen Hohlraum mindestens weniger inhomogen ist.

**Figur 11** illustriert, dass auch bei nicht-elliptischen, sondern bspw. wie in Fig. 11 näherungsweise dreieckigen Querschnittsformen eine angepasste Hohlraum-Querschnittsform gewählt werden kann. Dasselbe gilt für andere natürlich vorkommende Querschnittsformen, inklusive näherungsweise rechteckig oder tailliert.

**Figur 12** zeigt ein erstes Beispiel eines Implantats mit einer Mehrzahl von Wurzelkanälen 91, 92. Pro Wurzelkanal ist ein Hohlraum 2a bzw. 2b vorhanden. Dementsprechend weist das Implantat zwei thermoplastische Elemente auf, welche in die Hohlräume 2a, 2b einschiebbar sind oder bereits in diesen angeordnet sind, bspw. als entsprechende Füllung. Jeder der Hohlräume führt in einen der Wurzelkanäle 91, 92. Pro Hohlraum/Wurzelkanal kann eine oder mehrere Austrittsöffnungen 4 vorhanden sein.

**Figur 13** illustriert ebenfalls ein Implantat mit mehreren Wurzelkanälen 91, 92. Im Unterschied zur Ausführungsform gemäss Fig. 12 ist jedoch nur ein Hohlraum 2 vorhanden, d.h. nach koronal ist im Implantatkörper 1 nur eine einzige entsprechende Öffnung ausgebildet. Der Hohlraum weist einen koronalen Bereich 2.1 auf, der sich nach apikal in Teil-Hohlräume 2.2, 2.3 für die beiden Wurzelkanäle aufteilt. Pro Teil-Hohlraum kann eine Austrittsöffnung 4 oder können mehrere Austrittsöffnungen vorhanden sein. Da das thermoplastische Element im festen Zustand im Allgemeinen nicht ohne weiteres aufspalt- und biegbar ist, wird die Verflüssigung mindestens teilweise schon in der Tiefe stattfinden, in welcher der koronale Hohlraumbereich 2.1 in die Teil-Hohlräume 2.2, 2.3 übergeht. Zu diesem Zweck kann eine Anstoss- und Verzweigungspartie 95 so geformt sein, dass sie energierichtungsgebende Eigenschaften aufweist. Das thermoplastische Material wird dann im im Wesentlichen fliessfähigen Zustand durch die Teil-Hohlräume 2.2, 2.3 gepresst.

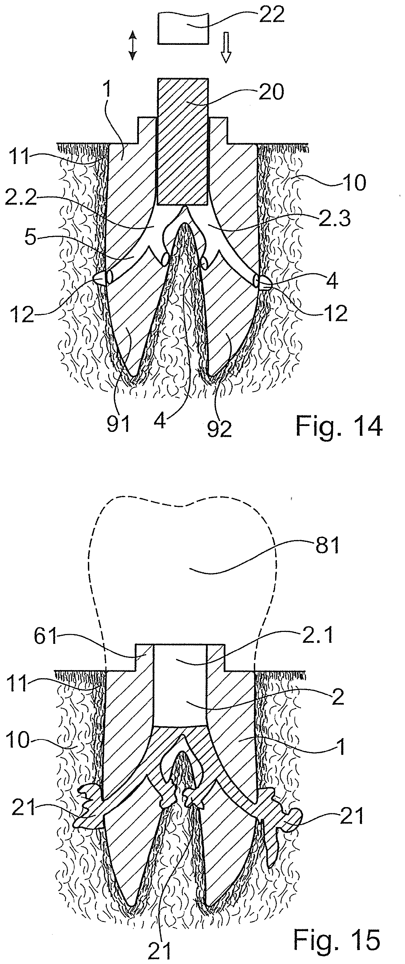

**Figuren 14 und 15** illustrieren das entsprechende Verfahren anhand geschnitten dargestellten Implantats mit zwei Wurzelkanälen und mit entsprechend apikal in zwei Teil-Hohlräumen endenden Hohlraum 2, wobei hier im Unterschied zu Fig. 13 pro Teil-Hohlraum zwei Austrittsöffnungen 4 illustriert sind. Anhand der in Fig. 14 und 15 illustrierten Ausführungsform werden auch einige allgemeine Prinzipien von verschiedenen Ausführungsformen des Verfahrens illustriert.

Fig. 14 zeigt den Implantatkörper 1 eingesetzt in die Extraktionsalveole oder eventuell eine nach der Extraktion, z.B. auch lange nach der Extraktion, präparierte Öffnung im Kieferknochen 10. In Fig. 14 ist ein verdichteter (kortikaler) Anteil 11 des Knochens illustriert, welcher am Knochenkamm sowie um die Extraktionsalveole herum ausgebildet ist. Vorgängig ist im Bereich der Austrittsöffnungen 4 oder mindestens einiger der Austrittsöffnungen lokal Knochengewebe entfernt oder gezielt geschwächt worden, so dass sich ein Zugang 12 ausbildet, durch welcher veflüssigtes Material in den spongiösen Knochen hinter der kortikalen Schicht eingetragen werden kann.

In einem ersten Schritt wird der Implantatkörper, optional mit bereits eingebrachtem thermoplastischem Element, relativ zum Knochen positioniert und in die Extraktionsalveole oder andere passende Knochenöffnung eingebracht. Dieser Schritt kann optional ein Einklopfen in den Knochen beinhalten. Anschliessend wir, wie in Fig. 14 im Ansatz illustriert, eine Sonotrode 22 benutzt, um das thermoplastische Element in die Öffnung nach apikal hineinzupressen, während sie mit mechanischen Schwingungen beaufschlagt wird, bis sie beginnt fliessfähig zu werden, zunächst in Kontakt mit der Anstoss- und Verzweigungspartie 95, und durch die Teil-Hohlräume 2.2, 2.3 zu den Austrittsöffnungen 4 gelangt und durch diese in benachbartes Knochengewebe gepresst wird. Nach dem Beenden der mechanischen Vibrationen wird, eventuell nachdem ein Anpressdruck noch eine gewisse Zeit aufrechterhalten wird, die Sonotrode 22 entfernt.

Fig. 15 zeigt die Situation nach dem Implantationsvorgang. In den Knochen eingedrungene Anteile 21 des thermoplastischen Materials sind wieder verfestigt und verankern so den Implantatkörper 1 relativ zum Knochen. Dieser Verankerungseffekt beruht unter anderem darauf, dass das thermoplastische Material Strukturen (Poren etc.) des Knochens interpenetriert hat und so einen Formschluss verursacht. Zu diesem kann auch beitragen, dass kortikales Knochengewebe 11 durch das thermoplastische Material hinterflossen wird, wie das bspw. anhand der eingedrungenen Anteile 21 ganz rechts in Fig. 15 illustriert ist. Auch eine gewisse Adhäsion des thermoplastischen Materials am Knochengewebe und/oder am Implantatkörper ist möglich und kann zur Verankerung beitragen.

Eine anschliessend - ggf. nach einer Zahnfleisch-Heilphase mit aufgesetztem Gingivaformer - direkt oder indirekt, via ein Abutment, aufgesetzte Krone 81 kann an einem Pfosten 61 und/oder an der Öffnung 2 und/oder an der Implantatschulter und/oder einer anderen Struktur des Implantatkörpers und eventuell auch des thermoplastischen Materials befestigt sein.

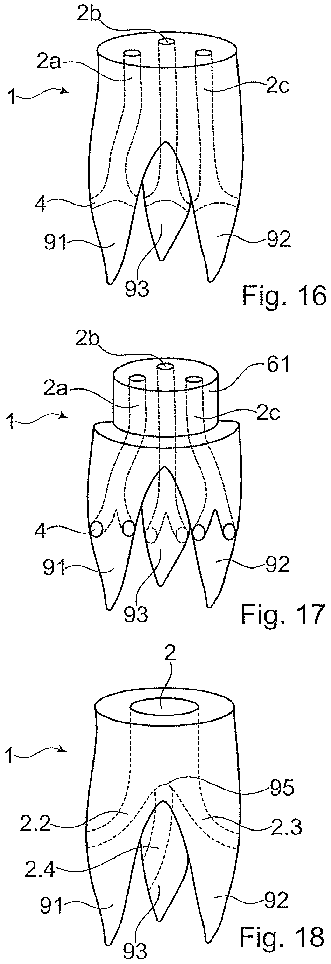

**Figur 16** zeigt ein Beispiel eines Implantatkörpers 1 mit drei Wurzelkanälen 91, 92, 93. In jeden führt ein Hohlraum 2a, 2b, 2c, d.h. das Implantat realisiert das in Fig. 12 für ein Implantat mit zwei Wurzelkanälen beschriebene Prinzip. Das Implantat gemäss Fig. 16 weist keinen Pfosten zur Befestigung der Krone auf. Die Krone kann stattdessen bspw. über von koronal her in die Hohlräume 2a, 2b, 2c eingreifende Befestigungsstifte befestigt werden; auch andere, in Fig. 16 nicht illustrierte Prinzipien sind denkbar. Figur 17 zeigt eine Variante mit einem als Pfosten 61 dienenden Implantathals.

**Figur 18** zeigt - hier wie Fig. 16 anhand eines Beispiels ohne Pfosten - die Möglichkeit, auch für ein Implantat mit drei Wurzelkanälen das anhand Fig. 13 beschriebene Prinzip zu realisieren, dass nur ein Hohlraum 2 vorhanden ist, der sich nach apikal in Teil-Hohlräume 2.2, 2.3, 2.4 für die Wurzelkanäle 91, 92, 93 aufteilt.

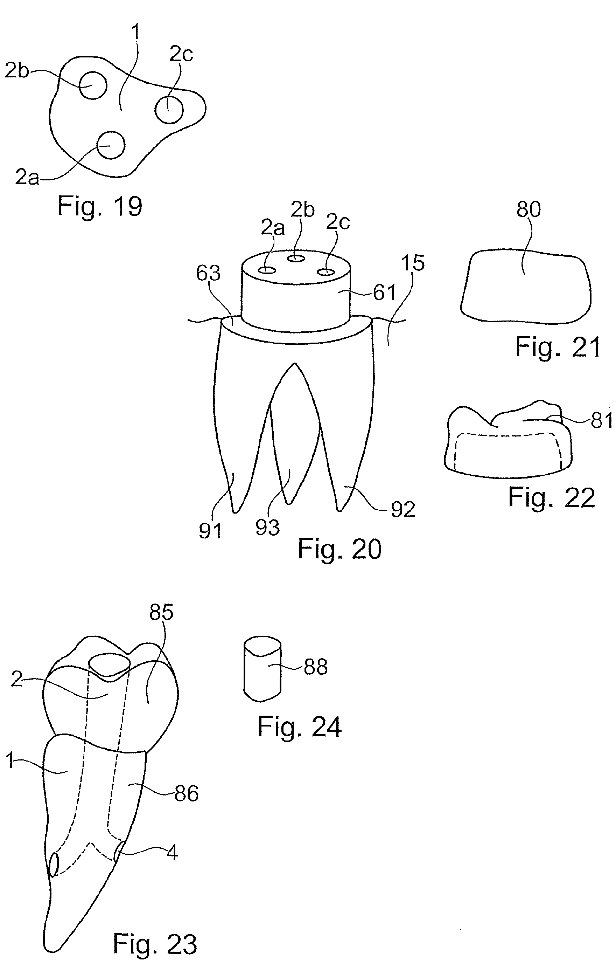

**Figur 19****,** die schematisch einen horizontalen Schnitt durch den Implantatkörper 1 zeigt, illustriert das Prinzip, dass in Ausführungsformen gemäss Fig. 12, 16 und 17 mit mehreren Hohlräumen 2a-2c die Verteilung der Hohlräume an die äussere Kontur des Implantatkörpers angepasst sein kann.

**Figuren 20-22** zeigen am Beispiel eines Implantats wie in Fig. 17 gezeigt das Prinzip, dass eine Stufe 63 zwischen dem apikalen Bereich (welcher hier einen enossalen Bereich und einen transgingivalen Bereich einschliesst) und einem Befestigungspfosten 61 ungefähr auf Zahnfleischniveau liegen kann, so dass ein sich ausbildender eventueller Spalt zwischen einem Gingivaformer 80 bzw. einer Krone 81 und dem apikalen Bereich ungefähr auf diesem Niveau ist. Auch andere Geometrien sind möglich. Insbesondere kann das Implanat auch als bone level-Implantat ausgebildet sein, d.h. die entsprechende Stufe bzw. das koronale Ende befindet sich dann ungefähr auf Knochenkammhöhe.

**Figur 23** zeigt, anhand eines Implantats mit einem einzigen Wurzelkanal, das Prinzip eines einteiligen Implantatkörpers 1, welcher nebst dem enossalen Bereich auch die Krone 85 ausbildet und so als Ersatzzahn fungiert. Die koronale Mündung des Hohlraums 2 muss in diesem Fall nach der Implantation verschlossen werden. Dies kann durch ein Verschlussstück 88 geschehen, wie es in **Figur 24** gezeichnet ist. Ein solches kann optional schon während des eigentlichen Verankerungsvorgangs vorhanden sein und ein Zwischenstück zwischen der einen Sonotrodenkörper und dem thermoplastischen Element bilden und damit während der Verankerung funktionell zur Sonotrode gehören. Es kann auch nachträglich eingebracht werden; bspw. als ein Zement, durch welchen die Mündung der Öffnung gefüllt wird, und der anschliessend ausgehärtet wird. Es ist auch nicht ausgeschlossen, dass das thermoplastische Material des thermoplastischen Elements einen solchen Verschluss bildet.

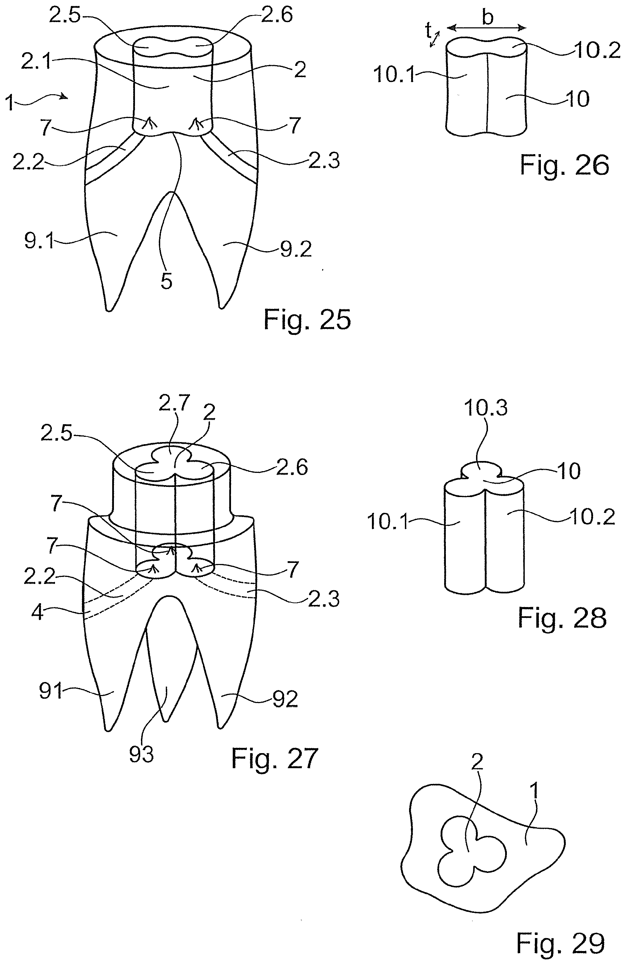

**Figur 25** illustriert, anhand eines Implantats mit zwei Wurzelkanälen, das Prinzip, dass der Hohlraum eine Mehrzahl von Flügeln 2.5, 2.6 aufweisen kann, welche zu den Teil-Hohlräumen 2.2, 2.3 führen. Entsprechend weist auch das thermoplastische Element 10 eine entsprechende Anzahl (hier zwei) Flügel 10.1, 10.2 auf. Das Verhältnis zwischen den Dimensionen senkrecht zur apikal-koronalen Achse, Breite b und Tiefe t, kann bedürfnisgerecht angepasst sein und hier bspw. ca. 2 betragen. Pro Flügel 2.5, 2.6 kann eine energierichtungsgebende Spitzen- und oder Kantenstruktur 7 vorhanden sein, so dass die Verflüssigung schwerpunktmässig an den apikalen Ende der Flügel ansetzt und nicht unbedingt in der Mitte zwischen diesen.

**Figuren 27 und 28** zeigen entsprechend Implantatkörper und thermoplastisches Element für ein Implantat mit drei Wurzelkanälen 91, 92, 93; Figur 29 illustriert eine entsprechende Querschnittdarstellung, die zeigt, dass die Orientierung, auch aufgrund anatomischer Gegebenheiten, ungefähr dem Verlauf der Mantelfläche des Implantats angepasst sein kann.

Generell, und unabhängig davon, ob Flügel der illustrierten Art vorhanden sind oder nicht, ist ein äusserer Querschnitt des thermoplastischen Elements und/oder eines distalen Endes der Sonotrode in vielen Ausführungsformen auf den inneren Querschnitt des Hohlraums - der Partie bis zur Anstosspartie 5 bzw. der Anstoss- und Verzweigungspartie 95 - angepasst.

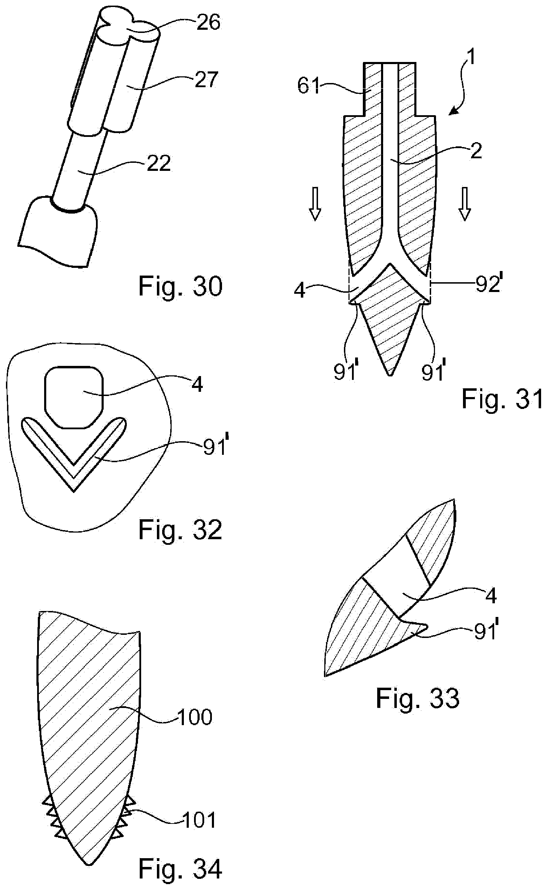

Das ist in **Figur 30** illustriert für das Beispiel einer für die Ausführungsform der Figuren 27-29 angepassten Sonotrode dieses Prinzip. Dadurch, dass die Sonotrode 22 eine distale, in einer distalen Auskopplungsfläche 26 endende Endpartie 27 aufweist, welche an den Querschnitt des Hohlraums 2 angepasst ist, wird ein Rückfluss von thermoplastischem Material nach koronal auch dann verhindert, wenn das thermoplastische Element bis zum koronalen (proximalen) Ende hin verflüssigt wird.

Wie vorstehend anhand Fig. 14 erklärt, kann es vorteilhaft sein, wenn der Implantologe vor dem Einsetzen des Implantatkörpers in die Extraktionsalveole lokal am Ort mindestens einiger der Austrittsöffnungen Knochengewebe entfernt oder gezielt schwächt. Dies kann von Hand geschehen, eventuell unter Verwendung geeigneter Mittel, bspw. einer auf das Implantat abgestimmten Maske.

**Figur 31** illustriert eine Alternative, gemäss welcher der Implantatkörper selbst für die lokale Entfernung eines Teils des Knochengewebes am Ort der Austrittsöffnungen ausgerüstet ist. Zu diesem Zweck sind erstens die Austrittsöffnungen 4 in einem Bereich angeordnet, in dem sich der Implantatkörper nach apikal verjüngt. Zweitens befindet sich apikal mindestens einer der Austrittsöffnungen, bspw. apikal jeder Austrittsöffnung, ein räumendes Element in Form eines eine Schneidekante 91 bildenden Vorsprungs. Beim Einführen des Implantatkörpers in die Extraktionsalveole haben die Schneidekanten 91 zunächst keine Wirkung, aufgrund der sich nach apikal verjüngenden Form. Erst wenn die Schneidekanten in den Bereich gelangen, in welchem sich die Extraktionsalveole zu einem Querschnitt verjüngt, welcher dem Querschnitt des Implantats am Ort der Austrittsöffnungen 4 entspricht, greifen die Schneidekanten in das Knochengewebe ein und räumen lokal kortikales Knochengewebe weg. Die gestrichelten Linien 92 illustrieren die Möglichkeit, dass die radiale Ausdehnung der die Schneidekanten 91 bildenden Vorsprünge auf die radiale Ausdehnung des Implantats zum koronalen Ende der Austrittsöffnungen hin angepasst sein kann; im Allgemeinen wird die radiale Ausdehnung der Schneidekanten etwas grösser sein.

**Figur 32** zeigt in Form einer Draufsicht auf die Region um die Austrittsöffnung 4 herum ein Detail eines alternativen Implantatkörpers mit Schneidekante 91. Die Schneidekante verläuft pflugförmig anstatt horizontal, um ein weniger brachiales Einführen des Implantats zu ermöglichen. Auch der Querschnitt der Schneidekante 91 kann je nach Bedürfnissen angepasst werden um mehr oder weniger aggressiv in das Knochengewebe einzudringen. **Figur 33** zeigt eine im Vergleich zu Figur 31 deutlich weniger aggressive Querschnittform.In den gezeichneten Ausführungsbeispielen sind die Austrittsöffnungen 4 insbesondere jeweils nur in einer Tiefe angeordnet, d.h. es gibt nicht mehrere Etagen mit Austrittsöffnungen. Das schliesst nicht aus, dass sich die Austrittsöffnungen zu verschiedenen lateralen Seiten hin auf unterschiedlichen Höhen (insbesondere leicht unterschiedlichen Höhen) befinden. So kann insbesondere ein Tiefenbereich, bspw. relativ weit apikal, für die primäre Stabilisierung mittels des Thermoplasten dienen, während in einem andere Tiefenbereich, bspw. etwas weiter koronal, sofort nach der Implantation ein Stabilisierung durch Osseointegration beginnen kann - insbesondere in direktem Kontakt zwischen dem Implantat und demjenigen Knochengewebe, welches schon vor der Extraktion in Kontakt mit dem extrahierten Zahn stand.

Zu diesem Zweck kann es bei Ausführungsformen mit Schneidekanten auch vorteilhaft sein, wenn sich koronal von Austrittsöffnungen keine Schneidekanten befinden.

**Figur 34** illustriert ein - als solches und in Kombination mit anderen in diesem Text beschriebenen Elementen ebenfalls zum Erfindungsgegenstand gehörendes - Werkzeug zum Vorbereiten einer Extraktionsalveole für die Implantation. Das Werkzeug 100 hat, mindestens im Bereich, wo dieser Austrittsöffnungen aufweist, die Form des anschliessend zu implantierenden Implantatkörpers. Am Ort der Austrittsöffnungen sind abtragende Strukturen 101, bspw. in Form einer makroskopischen Rauigkeit (Schleifstrukturen) oder von kleinen Schneidekanten oder anderen Erhebungen, vorhanden. Das Werkzeug 100 kann bspw. an ein Gerät zur Erzeugung von mechanischen Vibrationen angeschlossen und in die Extraktionsalveole eingeführt werden. Dort wird es mit den Vibrationen beaufschlagt, wodurch lokal im Ort der abtragenden Strukturen 101 das Gewebe gezielt abgetragen und geschwächt wird. Anschliessend an das Entfernen des Werkzeugs 100 wird der Implantatkörper positioniert und das Verfahren wie vorstehend beschrieben durchgeführt. Für das Beaufschlagen des Werkzeugs 100 mit den mechanischen Schwingungen und für das Einkoppeln von mechanischen Schwingungen in die Sonotrode kann bspw. dasselbe Ultraschall erzeugende Gerät verwendet werden. Es ist unabhängig davon möglich, für den Präparationsschritt mit anderen, bspw. deutlich tieferen Frequenzen zu arbeiten als für den Verflüssigungsschritt.

## Patentansprüche

1. Dentalimplantat, aufweisend:
• Einen Implantatkörper (1), welcher sich zwischen einem koronalen und einem apikalen Ende erstreckt und eine enossale Aussenfläche definiert, wobei der Implantatkörper einen nach koronal offenen Hohlraum (2) sowie mindestens eine Austrittsöffnung (4) von einem Innern zur enossalen Aussenfläche aufweist,
• und ein thermoplastisches Element (20) im Festzustand, welches im Hohlraum (2, 2a, 2b, 2c) angeordnet oder in diesen einbringbar ist, wobei das thermoplastische Element (20) durch Anlegen einer nach apikal in den Hohlraum hinein gerichteten Presskraft und von mechanischen Schwingungen in einen mindestens teilweise fliessfähigen Zustand bringbar ist und in diesem Zustand mindestens ein Anteil von fliessfähigem Material des thermoplastischen Elements aufgrund der Presskraft durch die mindestens eine Austrittsöffnung (4) in umgebendes Knochengewebe pressbar ist, wenn die Implantatkörper (1) in einer Öffnung im Knochengewebe angeordnet und die enossale Aussenfläche mit Knochengewebe in Kontakt ist, wobei der Hohlraum (2) eine nicht rotationssymmetrische Querschnittform hat, **dadurch gekennzeichnet, dass** das thermoplastische Element (20) einen nicht kreisförmigen, der Querschnittsform des Hohlraums entsprechenden Querschnitt aufweist.

2. Dentalimplantat nach Anspruch 1, wobei die Querschnittform des Hohlraums (2, 2a, 2b, 2c) elliptisch, vieleckig mit abgerundeten Ecken oder mehrlappig ist.

3. Dentalimplantat nach Anspruch 1 oder 2, wobei die Querschnittform des Hohlraums (2, 2a, 2b, 2c) so auf eine äussere Querschnittform des Implantatkörpers abgestimmt ist, dass eine Wandstärke der den Hohlraum umgebenden Wand im Vergleich zu einem Körper mit derselben äusseren Querschnittform aber einem rotationszylindrischen Hohlraum mindestens weniger inhomogen ist.

4. Dentalimplantat nach einem der vorangehenden Ansprüche, wobei der Implantatkörper in einem enossalen Bereich mehrere nach apikal ragende Wurzelvorsprünge (91, 92, 93) aufweist.

5. Dentalimplantat nach Anspruch 4, wobei der Hohlraum (2) als einziger von einer koronalen Endfläche des Implantatkörpers nach apikal führender Hohlraum (2) vorhanden ist, welcher sich nach apikal in Teil-Hohlräume (2.2, 2.3, 2.4) verzweigt, welche Teil-Hohlräume (2.2, 2.3, 2.4) in die Wurzelvorsprünge führen, wobei beispielsweise pro Teil-Hohlraum (2.2, 2.3, 2.4) eine Mehrzahl der Austrittsöffnungen (4) vorhanden ist.

6. Dentalimplantat nach Anspruch 5, wobei der Hohlraum (2) eine Mehrzahl von Flügeln (2.5, 2.6) aufweist, die zu den Teil-Hohlräumen (2.2, 2.3, 2.4) führen.

7. Dentalimplantat nach einem der vorangehenden Ansprüche, wobei apikal jeder Austrittsöffnung ist eine Schneidkante (91') vorhanden ist.

8. Dentalimplantat nach Anspruch 7, wobei die Schneidekante (91') im Wesentlichen horizontal, aber in Umfangrichtung nicht vollständig umlaufend verläuft.

9. Implantationsset, aufweisend ein Dentalimplantat nach einem der vorangehenden Ansprüche sowie eine Sonotrode (22), welche ausgeformt ist, von koronal her in den Hohlraum einzugreifen und die mechanischen Schwingungen sowie die Presskraft anzulegen.

10. Implantationsset nach Anspruch 9, wobei die Sonotrode (22) in einem Querschnitt nicht kreisförmig ist und einen dem Querschnitt des Hohlraums angepassten Querschnitt aufweist.

11. Verfahren zum Herstellen eines Dentalimplantatkörpers (1) für ein Dentalimplantat nach einem der Ansprüche 1-8, wobei in einem ersten Schritt durch eine Messung Daten eines Patienten aufgenommen und in ein 3D-Modell eines Implantats umgesetzt werden, wobei dieses 3D-Modell mit dem mindestens einen Hohlraum versehen und anschliessend der Dentalimplantatkörper auf als physische Umsetzung des mit dem Hohlraum versehenen 3D-Modells in einem computerunterstützten Fertigungsverfahren hergestellt wird.

## Claims

1. A dental implant comprising:
- An implant body (1) extending between a coronal end and an apical end and defining an endosseous outer surface, the implant body having a cavity (2) open in a coronal direction and at least one outlet opening (4) from an interior to the endosseous outer surface,
- and a thermoplastic element (20) in the solid state, which is arranged in the cavity (2, 2a, 2b, 2c) or can be introduced therein, wherein the thermoplastic element (20) can be brought into an at least partially flowable state by the application of a pressing force directed apically into the cavity and of mechanical vibrations, and in this state at least a proportion of flowable material of the thermoplastic element can be pressed through the at least one outlet opening (4) into surrounding bone tissue as a result of the pressing force when the implant body (1) is arranged in an opening in the bone tissue and the endosseous outer surface is in contact with bone tissue, wherein
the cavity (2) has a non-rotationally symmetrical cross-sectional shape, **characterised in that** the thermoplastic element (20) has a non-circular cross-section corresponding to the cross-sectional shape of the cavity.

2. The dental implant according to claim 1, wherein the cross-sectional shape of the cavity (2, 2a, 2b, 2c) is elliptical, polygonal with rounded corners or multi-lobed.

3. The dental implant according to claim 1 or 2, wherein the cross-sectional shape of the cavity (2, 2a, 2b, 2c) is matched to an outer cross-sectional shape of the implant body such that a wall thickness of the wall surrounding the cavity is at least less inhomogeneous compared to a body having the same outer cross-sectional shape but a rotationally cylindrical cavity.

4. The dental implant according to any one of the preceding claims, wherein the implant body comprises a plurality of apically projecting root projections (91, 92, 93) in an endosseous region.

5. The dental implant according to claim 4, wherein the cavity (2) is present as the only cavity (2) leading apically from a coronal end surface of the implant body, which cavity (2) is divided apically into partial cavities (2. 2, 2.3, 2.4), which partial cavities (2.2, 2.3, 2.4) lead into the root projections, wherein, for example, a plurality of the outlet openings (4) are present per partial cavity (2.2, 2.3, 2.4).

6. The dental implant according to claim 5, wherein the cavity (2) comprises a plurality of wings (2.5, 2.6) leading to the partial cavities (2.2, 2.3, 2.4).

7. The dental implant according to any one of the preceding claims, wherein a cutting edge (91') is present apically of each outlet opening.

8. The dental implant according to claim 7, wherein the cutting edge (91') is substantially horizontal but not completely circumferential.

9. An implantation set comprising a dental implant according to any one of the preceding claims and a sonotrode (22) shaped to engage the cavity from coronally and to apply the mechanical vibrations and the pressing force.

10. The implantation set according to claim 9, wherein the sonotrode (22) is non-circular in a cross-section and has a cross-section adapted to the cross-section of the cavity.

11. A method of manufacturing a dental implant body (1) for a dental implant according to any one of claims 1-8, wherein in a first step data of a patient are recorded by a measurement and converted into a 3D model of an implant, wherein this 3D model is provided with the at least one cavity and subsequently the dental implant body is manufactured on as physical conversion of the 3D model provided with the cavity in a computer-assisted manufacturing process.

## Revendications

1. Implant dentaire, comprenant :
- Un corps d'implant (1) s'étendant entre une extrémité coronale et une extrémité apicale et définissant une surface extérieure endo-osseuse, le corps d'implant présentant une cavité (2) ouverte vers coronairement et au moins une ouverture de sortie (4) depuis un intérieur vers la surface extérieure endo-osseuse,
- et un élément thermoplastique (20) à l'état solide, qui est disposé dans la cavité (2, 2a, 2b, 2c) ou peut être introduit dans celle-ci, l'élément thermoplastique (20) pouvant être amené dans un état au moins partiellement fluide par l'application d'une force de compression dirigée vers l'apical dans la cavité et de vibrations mécaniques et, dans cet état, au moins une partie de la matière fluide de l'élément thermoplastique pouvant être comprimée dans le tissu osseux environnant par la force de compression à travers l'au moins une ouverture de sortie (4), lorsque le corps d'implant (1) est disposé dans une ouverture dans le tissu osseux et que la surface extérieure endo-osseuse est en contact avec le tissu osseux, dans lequel la cavité (2) a une forme de section transversale qui n'est pas à symétrie de révolution, **caractérisée en ce que** l'élément thermoplastique (20) a une section transversale non circulaire correspondant à la forme de section transversale de la cavité.

2. Implant dentaire selon la revendication 1, dans lequel la forme de la section transversale de la cavité (2, 2a, 2b, 2c) est elliptique, polygonale avec des coins arrondis ou multilobée.

3. Implant dentaire selon la revendication 1 ou 2, dans lequel la forme de la section transversale de la cavité (2, 2a, 2b, 2c) est adaptée à une forme de section transversale extérieure du corps de l'implant de telle sorte qu'une épaisseur de paroi de la paroi entourant la cavité est au moins moins inhomogène par rapport à un corps ayant la même forme de section transversale extérieure mais une cavité cylindrique de révolution.

4. Implant dentaire selon l'une des revendications précédentes, dans lequel le corps de l'implant présente dans une zone endo-osseuse plusieurs saillies radiculaires (91, 92, 93) faisant saillie vers l'apical.

5. Implant dentaire selon la revendication 4, dans lequel la cavité (2) est la seule cavité (2) s'étendant vers l'apical depuis une surface d'extrémité coronale du corps de l'implant, qui se divise vers l'apical en sous-cavités (2. 2, 2.3, 2.4), lesquelles cavités partielles (2.2, 2.3, 2.4) conduisent dans les saillies radiculaires, une pluralité d'ouvertures de sortie (4) étant par exemple présente par cavité partielle (2.2, 2.3, 2.4).

6. Implant dentaire selon la revendication 5, dans lequel la cavité (2) présente une pluralité d'ailettes (2.5, 2.6) qui mènent aux cavités partielles (2.2, 2.3, 2.4).

7. Implant dentaire selon l'une des revendications précédentes, dans lequel une arête de coupe (91') est présente apicalement à chaque ouverture de sortie.

8. Implant dentaire selon la revendication 7, dans lequel l'arête de coupe (91') est sensiblement horizontale, mais ne s'étend pas complètement sur la circonférence.

9. Kit d'implantation comprenant un implant dentaire selon l'une quelconque des revendications précédentes, ainsi qu'une sonotrode (22) configurée pour s'engager coronairement dans la cavité et appliquer les vibrations mécaniques et la force de compression.

10. Kit d'implantation selon la revendication 9, dans lequel la sonotrode (22) est non circulaire en section transversale et présente une section transversale adaptée à la section transversale de la cavité.

11. Procédé de fabrication d'un corps d'implant dentaire (1) pour un implant dentaire selon l'une des revendications 1 à 8, dans lequel, dans une première étape, des données d'un patient sont enregistrées par une mesure et converties en un modèle 3D d'un implant, ce modèle 3D étant pourvu de la au moins une cavité et le corps d'implant dentaire étant ensuite fabriqué sur la base d'une conversion physique du modèle 3D pourvu de la cavité dans un procédé de fabrication assisté par ordinateur.
